# EUROPEAN PATENT SPECIFICATION

(11) **EP 3 257 423 B1**
(45) Date of publication and mention of the grant of the patent: **29.01.2020**
(21) Application number: 16175068.2
(22) Date of filing: 17.06.2016
(51) Int. Cl.: A47L 15/42

(54) **DISHWASHING MACHINE**
GESCHIRRSPÜLMASCHINE
LAVE-VAISSELLE

(43) Date of publication of application: 20.12.2017
(73) Proprietor: Electrolux Professional S.p.A., 33170 Pordenone (IT)
(72) Inventor: CESCOT, Paolo, 33080 Porcia Pordenone (IT); ASQUINI, Antonio, 33170 Pordenone (IT); SALTON, Fabrizio, 33170 Pordenone (IT); VIGNOCCHI, Massimiliano, 33170 Pordenone (IT)
(74) Representative: Electrolux Group Patents

(56) References cited:
- EP-A2- 2 050 381
- WO-A1-2015/058882
- US-A1- 2007 125 403

## Description

### Field of the invention

The present invention relates to a dishwashing machine of the type comprising a washing unit, a rinsing unit and a heat pump circuit for heating water to be used in said washing unit and/or in said rinsing unit.

### Background of the invention

Typically, industrial dishwashing machines, such as the one used in restaurants and canteens, are formed by different interconnected modules into which each single operation required for treating dishware is individually performed.

In typical designs, the dishwashing machines comprises at least a washing module (called also washing unit) and a rinsing module (called also rinsing unit).

Dishware is moved along a tunnel defined in said modules by means of a conveyer member, so that different phases of treatment can be performed.

In this manner it is possible to produce modular dishwashing machines, i.e. dishwashing machines in which the number of modules is selected according to the specific needs and to the required washing capability.

In order to recover at least part of the heat associated to the vapour produced during washing and rinsing processes, several solutions have been developed in the art.

One of these solutions is based on the use of a condensing unit capturing the vapour inside the washing module and condensing it by fresh water coming from external water mains and directed to a rinse boiler. In this manner, the temperature of incoming water is increased before entering the boiler, thus recovering part of the heat that would be otherwise wasted through the vapour.

A further improvement is represented by the use of a heat pump system coupled with the condensing unit.

In this case, the evaporator of the heat pump system is used in order to increase the condensing effect of the condensing unit and increase the temperature of water entering the boiler.

EP2050381 discloses a tunnel dishwasher having a fluid tank for storing a cleaning fluid, and a suction-extraction device for suction-extracting moist air from a cleaning chamber. A heat recovery device is configured to extract heat from the moist air, and has a Peltier element with a heat-absorption side and a waste-heat side. The waste-heat side is in thermal contact with a fluid heating device that is in contact with a cooling fluid and configured to heat the cooling fluid, where the appliance uses the cooling fluid for a cleaning process.

WO2015058882 discloses a method for washing items to be washed in a programmed machine and a programmed machine for washing products to be washed, in particular for carrying out such a method, in which a heat pump is continuously operated over multiple washing processes and at least one interruption period, each of which lies between two washing processes, for manually inserting the items to be washed into the washing zone or for removing the items to be washed out of the washing zone.

### Summary of the invention

The aim of the invention is to provide a dishwashing machine comprising a washing unit, a rinsing unit, and a heat pump circuit for heating water to be used in the washing unit and/or in the rinsing unit, in which heat recovery is increased and, in general, in which overall efficiency is improved.

A further object is to provide a dishwashing machine in which the amount of vapour emitted in the environment is decreased.

Still another object of the invention is to provide a dishwashing machine in which the overall conditions of the environment in which the machine is installed can be improved during operation thereof.

Another object of the invention is to provide a dishwashing machine capable of conditioning the air in the environment in which it is installed.

A further object of the invention is to provide a dishwashing machine in which a dedicated condensing unit is not required in order to recover heat.

According to the invention, it is provided a dishwashing machine comprising a washing unit, a rinsing unit and a heat pump circuit for heating water to be used in the washing unit and/or in the rinsing unit, wherein a washing chamber and a rinsing chamber are defined in the washing unit and in the rinsing unit, respectively, and further comprising a suction device mixing an air flow drawn from an environment in which the dishwashing machine is installed and a vapour flow exiting from the rinsing unit and/or from the washing unit, the suction device being connected to a heat pump heat exchange unit of the heat pump circuit for heating a working fluid flowing in the heat pump circuit by a mixed flow of the air flow and the vapour flow.

It is to be understood that in the dishwashing machine according to the invention, vapour generated during washing or rinsing dishware is at least partially recovered before being emitted in the environment.

Furthermore, part of the air in the environment in which the dishwashing machine is installed can be drawn and directed to the heat pump heat exchange unit so that conditioning of the environment can be effectively achieved.

Also the use of a mixed flow of external air flow and vapour flow for heating the working fluid makes it possible to achieve the heat exchange at lower temperature, thus improving efficiency of the dishwashing machine.

Advantageously the washing unit and the rinsing unit are connected in series, i.e. the outlet of the washing unit is connected to the inlet of the rinsing unit.

Advantageously, the washing unit can comprise a single washing unit or a plurality of washing units connected in series (i.e. the inlet of a washing unit is connected to the outlet of another washing unit); similarly, the rinsing unit can comprise a single rinsing unit or a plurality of rinsing units connected in series (i.e. the inlet of a rinsing unit is connected to the outlet of another rinsing unit). In an advantageous embodiment in which a washing unit comprises a plurality of washing units connected in series, one or more of these washing units, in particular the firs one of the series, can have the function of pre-washing the dishware.

According to another aspect of the invention, the heat pump heat exchange unit comprises an evaporator of the heat pump circuit. In this manner the circuit if formed in a simple and particular efficient way.

The washing unit comprises an inlet opening through which dishware enters the washing unit, and the rinsing unit comprises an outlet opening through which dishware exits from the rinsing unit, the suction device comprising a suction opening positioned upstream the inlet opening and/or downstream the outlet opening. Accordingly, vapour can be drawn from the suction device as it exits the washing and/or the rinsing units.

Preferably, the suction device comprises a connection duct providing the mixed flow to the heat pump heat exchange unit; more preferably a connection duct is positioned at least partially above the washing unit and/or the rinsing unit.

More preferably, a connection duct is positioned completely above the washing unit and/or the rinsing unit.

In this manner, the dishwashing machine can have a particularly compact design, while at the same time allowing a proper collection of the vapour exiting from the washing and/or rinsing units.

According to a preferred embodiment, the dishwashing machine comprises a secondary heating circuit heating water for treating dishware in the dishwashing machine by means of a secondary fluid circulating in the secondary heating circuit, the secondary heating circuit comprising a secondary heat exchange unit thermally coupled with the heat pump circuit for heating the secondary fluid.

According to this features, the modularity of the dishwashing machine can be improved since water for treating dishware can be heated by a different circuit than the one used for the heat pump system.

Furthermore, for the same reasons, it is not required to use a refrigerant as secondary fluid (on the contrary, simple water can be used), thus making it possible to charge the secondary heating circuit (e.g. with water) even after installation of the dishwashing machine. Accordingly, this also improves the modularity of the machine according to the present embodiment.

Preferably, the heat pump circuit and the secondary heating circuit are designed and configured such that, when the heat pump circuit is working at full performances, the secondary fluid has a temperature at least equal to a sanitization temperature of dishware at least at a predetermined position along the secondary heating circuit located downstream the secondary heat exchange unit with reference to a circulation direction of the secondary fluid in the secondary heating circuit.

In the context of the present invention, the expression "working at full performances" means working in a substantially stable condition, after the transitory phases following the switching-on of the heat pump circuit have ended.

This allows heating the water at a temperature high enough for the treating of the dishware by means of the heat pump circuit only, without necessarily requiring further additional heating means.

Preferably, the secondary heating circuit is a closed circuit, the secondary fluid circulating in the secondary heating circuit at a pressure above the atmospheric pressure. Even more preferably, the secondary fluid circulates in the secondary heating circuit at a pressure above 2 bar.

In this manner the fluid in the secondary circuit can remain in the liquid phase also at high temperature, thus making it circulation easier.

According to a preferred embodiment, the secondary fluid comprises water, so that the secondary circuit can be easily filled or re-filled even after the installation of the dishwashing machine.

Even more preferably, the secondary fluid consists of water, thus avoiding the use of refrigerant fluid in the secondary circuit. In this manner any risk of pouring refrigerant in the reservoir and tanks collecting water for treating dishware is avoided even if the respective heat exchangers are located inside them.

Preferably, the working fluid flowing in the heat pump circuit comprises CO₂ and even more preferably, the working fluid consists of CO₂, which is particularly suitable in order to reach the temperatures required for treating dishware.

According to a further aspect, the secondary heating circuit comprises a trailing heat exchange unit in which water provided by a main supply is heated by the secondary fluid. In this manner, heat can be further recovered since the water to be used for treating dishware is pre-heated.

According to a preferred embodiment, the secondary heating circuit comprises a main heat exchange unit arranged for heating water for treating dishware collected in a water reservoir. In this manner, the secondary heating circuit can be used to heat water in the reservoir, thus providing hot water suitable for treating dishware available when required.

Preferably, the dishwashing machine further comprises an auxiliary heat exchange unit arranged along the secondary circuit downstream the main heat exchange unit with reference to a circulation direction of the secondary fluid in the secondary heating circuit, and heating water in a wash tank collecting water for washing dishware in the washing unit.

In this way the residual heat from the heat exchange that occurs in the main heat exchange unit can be used for heating or pre-heating water, thus enhancing the heat recovery in the dishwashing machine.

According to a preferred embodiment, the trailing heat exchange unit is arranged along the secondary circuit downstream the main heat exchange unit. Also in this case, the provision of the exchange unit downstream the main heat exchange unit allows to enhance the heat recovery.

Preferably, the trailing heat exchange unit is arranged, along the secondary circuit, downstream the auxiliary heat exchange unit, thus allowing an even further heat recovery. According to a preferred embodiment, the main heat exchange unit and the auxiliary heat exchange unit are located inside the water reservoir and the wash tank, respectively. This allows to heat water by means of heat exchange provided by the exchange units. Preferably, the secondary heat exchange unit comprises a condenser of the heat pump circuit. In this manner efficiency of the circuit can be further improved.

According to a further aspect, the present invention also relates to a method for operating a dishwashing machine including a washing unit, a rinsing unit and a heat pump circuit for heating water to be used in the washing unit and/or in the rinsing unit, wherein a washing chamber and a rinsing chamber are defined in the washing unit and in the rinsing unit, respectively, the method comprising:
- mixing an air flow from an environment in which the dishwashing machine is installed with a vapour flow exiting from the washing unit and/or the rinsing unit;
- heating a flow of working fluid in the heat pump circuit by a mixed flow formed by the mixing of the air flow and the vapour flow.

Also according to the method of the present invention, vapour generated during washing or rinsing dishware is at least partially recovered before being emitted in the environment. Furthermore, part of the air in the environment in which the dishwashing machine is installed can be drawn and directed to the heat pump heat exchange unit so that conditioning of the environment can be effectively achieved.

Also the use of a mixed flow of external air flow and vapour flow for heating the working fluid makes it possible to achieve the heat exchange at lower temperature, thus improving efficiency of the dishwashing machine.

Preferably, the vapour flow is collected outside the washing unit and/or the rinsing unit. Accordingly, vapour can be drawn from the suction device as it exits the washing or the rinsing units.

According to a preferred embodiment, the method comprises filling a water reservoir with the water heated by the mixed flow, the water reservoir collecting water for treating dishware in the dishwashing machine.

In this manner hot water required for treating dishware can be obtained by means of the mixed flow, thus reducing the amount of energy required.

According to a preferred embodiment, the method comprises:
- heating a secondary fluid circulating in the secondary heating circuit by means of the heat pump circuit;
- heating water for treating dishware in the dishwashing machine by means of the secondary fluid heated by the heat pump circuit.

According to this features, the modularity of the dishwashing machine can be improved since water for treating can be heated by a different circuit than the one used for the pump heat system..

Furthermore, for the same reasons, it is not required to use a refrigerant as secondary fluid, thus making it possible to charge the circuit even after installation of the dishwashing machine. Accordingly, this also improves the modularity of the machine according to the present embodiment.

Preferably, the secondary fluid in the secondary heating circuit has a pressure higher than the atmospheric pressure. Even more preferably, the secondary fluid in the secondary heating circuit has a pressure higher than 2 bar.

In this manner the fluid in the secondary circuit can remain in the liquid phase also at high temperature, thus making it circulation easier.

According to a preferred embodiment, the water for treating dishware in the dishwashing machine is heated at a temperature suitable for sanitizing dishware. Preferably, the temperature suitable for sanitizing dishware is at least 70°C.

This allows heating the water at a temperature high enough for the treating of the dishware by means of the heat pump circuit only, without necessarily requiring further additional heating means.

Anyway the water for treating dishware in the dishwashing machine can be heated at higher or lower temperatures (e.g. 85°c, 75°C, 65°C).

According to a preferred embodiment, the secondary fluid comprises water, so that the secondary circuit can be easily filled or re-filled even after the installation of the dishwashing machine.

According to a further aspect, the working fluid comprises CO₂, which is particularly suitable in order to reach the temperatures required for treating dishware.

Preferably, the method comprises heating water provided from a main supply by the secondary fluid. In this manner, heat can be further recovered since the water to be used for treating dishware is pre-heated.

According to a further aspect, the temperature of the secondary fluid is adjusted by exchanging heat with the water from a main supply. This allows to control the temperature of the secondary fluid in a simple manner.

### Brief description of the drawings

These and other features and advantages of the invention will be better apparent from the following description of some exemplary and non-limitative embodiments, to be read with reference to the attached drawings, wherein:
- Fig. 1 is a schematic side view of a dishwashing machine according to the present invention;
- Fig. 2 is a schematic illustration of the hydraulic circuits of the dishwashing machine of Fig. 1.

### Detailed description of the invention

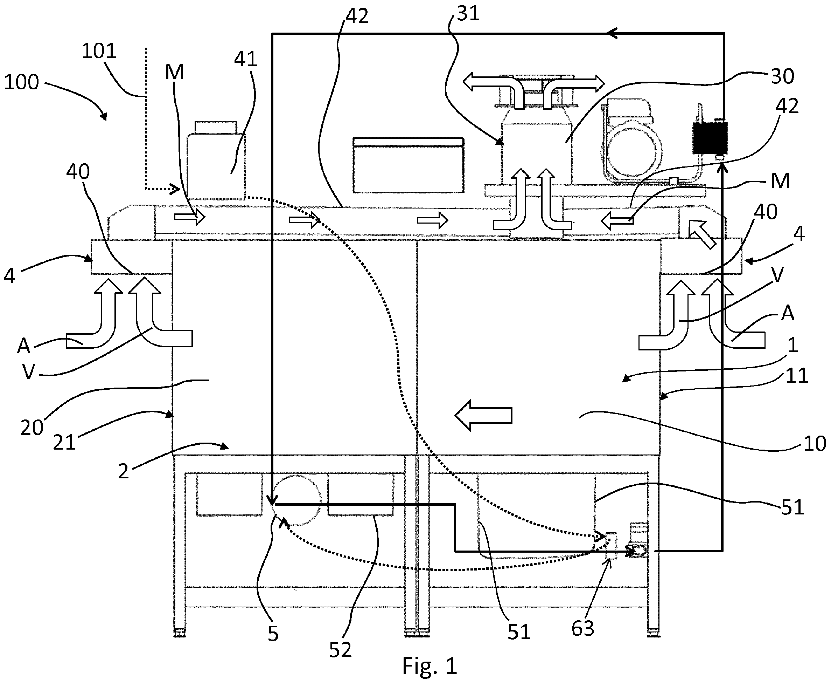

With reference initially to Fig. 1, a dishwashing machine according to the invention is generally designated with the reference number 100.

According to a preferred embodiment, the dishwashing machine 100 comprises at least a washing unit 1, into which dishware is washed, and at least a rinsing unit 2 into which dishware is rinsed after being washed; the rinsing unit 2 is connected in series with the washing unit 1, i.e. the (i.e. the outlet of the washing unit is connected to the inlet of the rinsing unit), so that the dishware exiting the washing unit 1 enters the rinsing unit 2. Advantageously, the washing unit 1 can comprise a single washing unit 1 or a plurality of washing units connected in series (i.e. the inlet of a washing unit is connected to the outlet of another washing unit); similarly, the rinsing unit 2 can comprise a single rinsing unit 2 or a plurality of rinsing units connected in series (i.e. the inlet of a rinsing unit is connected to the outlet of another rinsing unit). It is underlined that in case of a washing unit comprising a plurality of washing units connected in series, one or more of these washing units, in particular the firs one of the series, can have the function of pre-washing the dishware.

It will be anyhow appreciated that also different processes could be performed in the dishwashing machine, such as a pre-washing phase, further successive rinsing or a drying phase.

Within the context of the present invention, all phases that occur for cleaning or sanitizing dishware in the dishwashing machine will be generally indicated as dishware treating. Preferably, the washing unit 1 and the rinsing unit 2 are formed as two separated units, inside which dishware is moved along a conveyor member, not shown in the drawings.

In one advantageous embodiment, a washing chamber 10 and a rinsing chamber 20 are defined in the washing unit 1 and in the rinsing unit 2, respectively.

Anyway, in a further advantageous embodiment, a plurality of rinsing chambers and/or a plurality of washing chambers can be defined respectively in the washing unit 1 and in the rinsing unit 2.

According to a preferred embodiment, the dishwashing machine 100 comprises a water reservoir 5 collecting water for dishware treatment. Preferably, water is provided by a main supply 101, e.g. connected to a water supply public system.

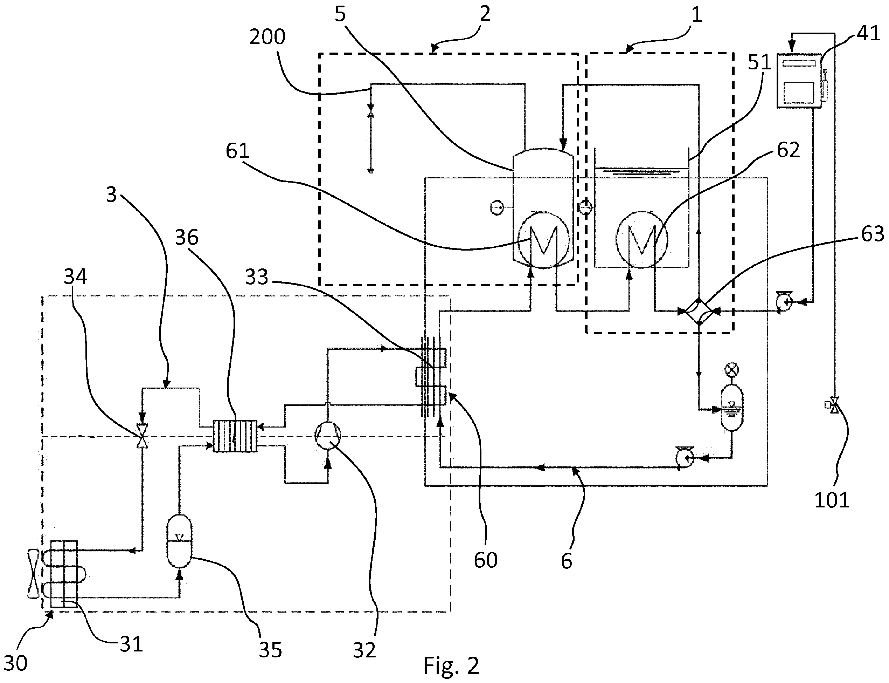

In one advantageous embodiment, the dishwashing machine 100 comprises an air gap 41, providing back-flow prevention of water provided by the main supply 101 in case of failures. Preferably, the washing unit 1 and the rinsing unit 2 comprises a wash tank 51 (in Fig. 2 it is illustrated only the wash tank 52 of the washing unit 1) collecting water for washing dishware, and a rinse tank 52 (illustrated only in Fig. 1) collecting water for the rinsing, respectively. According to a preferred embodiment, water for treating dishware is collected and heated in the water reservoir 5, and then it is poured, e.g. by a pouring line 200 in the wash tank 51 and/or the rinse tank 52.

In advantageous alternative embodiments, water can be heated both in the water reservoir 5 and in the wash tank 51 and/or the rinse tank 52. In further advantageous alternatives, water to be used for rinsing dishware is collected in the water reservoir 5.

According to a preferred embodiment, as dishware is moved along the conveyor member, nozzles, not show in the drawings, sprays water collected in wash tank 51 and/or in the rinse tank 52 towards the dishware.

Preferably, the dishwashing machine 100 comprises a heat pump circuit 3 for heating water to be used in the washing unit 1 and/or in the rinsing unit 2.

According to a preferred embodiment, the heat pump circuit 3 comprises an evaporator 31, a compressor 32, a condenser 33, and a throttling member 34.

In this manner, a working fluid of the heat pump circuit 3 can be subjected to a heat pump cycle by means of which heat can be provided by means of the condenser 33. Preferably, the working fluid comprises CO₂.

In one advantageous embodiment, the heat pump circuit 3 further comprises an accumulator 35 for collecting possible excess working fluid present in the heat pump circuit 3. Preferably, the heat pump circuit 3 comprises a regeneration exchanger 36 through which working fluid from a high pressure branch of the heat pump circuit 3 exchanges heat with working fluid from a low pressure branch thereof.

With reference now also to figure 2, according to a preferred embodiment, the dishwashing machine 100 comprises a secondary heating circuit 6 heating water for treating dishware in the dishwashing machine 100 by means of a secondary fluid.

Preferably, the secondary heating circuit 6 comprises a secondary heat exchange unit 60 thermally coupled with the heat pump circuit 3 for heating the secondary fluid.

Accordingly, the secondary fluid circulating in the secondary heating circuit 6 can be heated by means of the heat pump circuit 3, and the water for treating dishware in the dishwashing machine 100 can be heated by means of the secondary fluid heated by the heat pump circuit 3.

In one advantageous embodiment, the secondary heat exchange unit 60 is defined by the condenser 33 of the heat pump circuit 3.

According to a preferred embodiment, the secondary heating circuit 6 comprises a main heat exchange unit 61 heating water for treating dishware collected in the water reservoir 5. Preferably, the main heat exchange unit 61 is located downstream the secondary heat exchange unit 60 with reference to a circulation direction of the secondary fluid in the secondary heating circuit 6.

In one advantageous embodiment, the main heat exchange unit 61 is located inside the water reservoir 5.

According to a preferred embodiment, the secondary heating circuit 6 further comprises an auxiliary heat exchange unit 62 arranged along the secondary circuit 6 downstream the main heat exchange unit 61 with reference to a circulation direction of the secondary fluid in the secondary heating circuit 6 and heating water in the wash tank 51 collecting water for washing dishware in the washing unit 1. Preferably, the auxiliary heat exchange unit 62 is located inside the wash tank 51.

In a further advantageous embodiment, not illustrated, the secondary heating circuit 6 can comprises a further auxiliary heat exchange unit arranged along the secondary circuit 6 downstream the main heat exchange unit 61 with reference to a circulation direction of the secondary fluid in the secondary heating circuit 6, and heating water in the rinse tank 52 collecting water for rinsing.

In one advantageous embodiment, the secondary heating circuit 6 comprises a trailing heat exchange unit 63 in which water provided by the main supply 101 is heated by the secondary fluid. Preferably, the trailing heat exchange unit 63 is arranged along the secondary circuit 6 downstream the main heat exchange unit 61. In figure 2, the direction of the liquid fluxes within the trailing heat exchange unit 63 are schematically indicated by curved arrows.

In one advantageous embodiment, in which the secondary heating circuit 6 comprises the auxiliary heat exchange unit 62, the trailing heat exchange unit 63 is preferably arranged, along the secondary circuit 6, downstream the auxiliary heat exchange unit 62.

It should be noted that heat is exchanged first with water in the water reservoir 5, than, in case auxiliary heat exchange unit 62 is advantageously provided, with water in the wash tank 51 (and, in case a further auxiliary heat exchange unit is advantageously provided in the rinse tank 52, also with water in the rinse tank 52), and finally with water from the main supply 101. It will be therefore appreciated that in this manner water in the reservoir 5 can be heated at the highest temperature available and thus used for rinsing dishware. Nevertheless, the temperature of the secondary fluid is still high enough to heat - or at least pre-heat - water to be used for washing dishware, e.g. water collected in the wash tank 51. Therefore, according to a preferred embodiment, water provided from a main supply 101 is heated by the secondary fluid.

Also, since water from the main supply 101 is normally provided by the public water supply network, the secondary fluid can still be warm enough downstream the auxiliary heat exchange unit 62 for pre-heating water from the main supply 101 before filling the water reservoir 5.

It will be also appreciated that since water from public water supply network is normally at ambient temperature, a flow rate of water from the main supply 101 can be used for adjusting the temperature of the secondary fluid by exchanging heat therewith.

According to a preferred embodiment, the heat pump circuit 3 and the secondary heating circuit 6 are designed and configured such that, when the heat pump circuit 3 is working at full performances, the secondary fluid has a temperature at least equal to a sanitization temperature of dishware.

In the context of the present invention, the expression "working at full performances" means working in a substantially stable condition, after the transitory phases following the switching-on of the heat pump circuit have ended. Preferably, when the heat pump circuit is working at full performances rinsing water has a temperature of at least 70°C, while washing water has a temperature of at least 45°C. It will be also appreciated that in the context of the present invention, the term sanitization does not necessary requires temperatures above 100°C, but merely implies that dishware are suitable for being use again, since in practice all the possible dangerous bacteria have been killed by high temperature.

Therefore, according to a preferred embodiment, the temperature suitable for sanitizing dishware is at least 70°C, since this is the temperature which guarantees killing in practice all the possible dangerous bacteria. Anyway, also higher temperatures can be chosen (e.g. 85°C).

It will be also appreciated that preferably the sanitization temperature is provided at least at a predetermined position along the secondary heating circuit 6 located downstream the secondary heat exchange unit 60 with reference to a circulation direction of the secondary fluid in the secondary heating circuit 6.

In this manner it is possible to achieve water in the reservoir 5 at a temperature suitable for sanitizing dishware, since the main heat exchange unit 61 is preferably also located downstream the secondary heat exchange unit 60. Therefore, according to a preferred embodiment, the water for treating dishware in the dishwashing machine 100 is heated at a temperature suitable for sanitizing dishware.

It should also be noted that in order to design and configure the heat pump circuit 3 and the secondary heating circuit 6 as required for the present embodiment - i.e. such that, when the heat pump circuit 3 is working at full performances, the secondary fluid has a temperature at least equal to a sanitization temperature of dishware - the components of the such circuits can be suitably dimensioned and/or the features of the working fluid and the secondary fluid can be selected properly.

To this regard, as previously explained, a particularly suitable working fluid for the heat pump circuit is CO₂.

In a preferred embodiment, the secondary fluid comprises water or even it may consist of water.

Preferably, the secondary heating circuit 6 is a closed circuit, the secondary fluid circulating in the secondary heating circuit 6 at a pressure above the atmospheric pressure.

According to a preferred embodiment, the pressure is above 2 bar, thus making it possible to use also the water provided by the water supply network in order to fill the circuit.

With reference again to figure 1, according to a preferred embodiment, the dishwashing machine comprises a suction device 4 (preferably two suction devices 4) mixing an air flow A drawn from an environment in which the dishwashing machine 100 is installed and a vapour flow V exiting from the rinsing unit 2 and/or from the washing unit 1.

The vapour flow V is produced during operation of the dishwashing machine 100, either during washing dishware or during rinsing it.

Therefore, according to a preferred embodiment, the air flow A from the environment is mixed with a vapour flow V exiting from the washing unit 1 and/or the rinsing unit 2. Accordingly, the flow of working fluid in the heat pump circuit 3 can be heated by the mixed flow M formed by the mixing the air flow A and the vapour flow V; therefore, in one advantageous embodiment, the water in water reservoir 5 is heated by effect of the mixed flow M.

Preferably, the washing unit 1 comprises an inlet opening 11 through which dishware enters the washing unit 1 and, according to a preferred embodiment, the rinsing unit 2 comprising an outlet opening 21 through which dishware exits from the rinsing unit 2.

In one advantageous embodiment, inlet opening 11 and outlet opening 21 are not sealed and vapour flow V produced during washing or rinsing may exit from the rinsing unit 2 and from the washing unit 1.

Preferably, a suction device 4 comprises a suction opening 40 positioned upstream the inlet opening 11 and/or downstream the outlet opening 21.

In other words, the vapour flow V is preferably collected outside the washing unit 1 and/or the rinsing unit 2.

In the advantageous embodiment of Figure 1, two suction devices 4 are provided, one in correspondence to the inlet opening 11, and the other in correspondence of the outlet opening 21; therefore one suction device 4 mixes the vapour flow V exiting from the rinsing unit 2 with an air flow A drawn from an environment in which the dishwashing machine 100 is installed, and the other suction device 4 mixes the vapour flow V exiting from the washing unit 1 with an air flow A drawn from an environment in which the dishwashing machine 100 is installed.

In one advantageous embodiment, the suction device 4 (preferably both, is two suction devices are provided) is connected to a heat pump heat exchange unit 30 of the heat pump circuit 3 for heating a working fluid flowing in the heat pump circuit 3 by a mixed flow M of the air flow A and the vapour flow V.

According to an advantageous aspect of the invention, the heat pump heat exchange unit 30 comprises the evaporator 31 of the heat pump circuit 3.

As shown in figure 1, according to a preferred embodiment, the suction device 4 (preferably both suction devices 4) comprises a connection duct 42 providing the mixed flow M to the heat pump heat exchange unit 30. Preferably, the connection duct 42 is positioned, at least partially, above the washing unit 1 and/or the rinsing unit 2.

According to a preferred embodiment, also the suction opening/s 40 is/are provided on upper portion of the dishwashing machine 100, basically forming a plenum chamber together with the connection duct 42.

It will be also appreciated that in order to further improve the compactness of the dishwashing machine 100, the heat exchange unit 30 and, optionally, the whole heat pump circuit 3, can be positioned above the washing unit 1 and/or the rinsing unit 2.

## Claims

1. Dishwashing machine (100) comprising a washing unit (1), a rinsing unit (2) and a heat pump circuit (3) for heating water to be used in said washing unit (1) and/or in said rinsing unit (2), wherein a washing chamber (10) and a rinsing chamber (20) are defined in said washing unit (1) and in said rinsing unit (2) respectively, wherein it further comprises a suction device (4) mixing an air flow (A) drawn from an environment in which said dishwashing machine (100) is installed and a vapour flow (V) exiting from said rinsing unit (2) and/or from said washing unit (1), said suction device (4) being fluidly connected to a heat pump heat exchange unit (30) of said heat pump circuit (3) for heating a working fluid flowing in said heat pump circuit (3) by a mixed flow (M) of said air flow (A) and said vapour flow (V),
wherein said washing unit (1) comprises an inlet opening (11) through which dishware enters said washing unit (1), and said rinsing unit (2) comprises an outlet opening (21) through which dishware exits from said rinsing unit (2), **characterized in that** said suction device (4) comprises a suction opening (40) for collecting said vapour flow (V) that is positioned upstream said inlet opening (11) and/or downstream said outlet opening (21).

2. Dishwashing machine (100) according to claim 1, wherein said suction device (4) comprises a connection duct (42) providing said mixed flow (M) to said heat pump heat exchange unit (30), said connection duct (42) being positioned at least partially above said washing unit (10) and/or said rinsing unit (20).

3. Dishwashing machine (100) according to any of the preceding claims, further comprising a secondary heating circuit (6) heating water for treating dishware in said dishwashing machine (100) by means of a secondary fluid circulating in said secondary heating circuit (6), said secondary heating circuit (6) comprising a secondary heat exchange unit (60) thermally coupled with said heat pump circuit (3) for heating said secondary fluid.

4. Dishwashing machine (100) according to claim 3, wherein said heat pump circuit (3) and said secondary heating circuit (6) are designed and configured such that, when said heat pump circuit (3) is working at full performances, said secondary fluid has a temperature at least equal to a sanitization temperature of dishware, at least at a predetermined position along said secondary heating circuit (6) located downstream said secondary heat exchange unit (60), with reference to a circulation direction of said secondary fluid in said secondary heating circuit (6).

5. Dishwashing machine (100) according to claim 3 or 4, wherein said secondary heating circuit (6) comprises a trailing heat exchange unit (63) in which water provided by a main supply (101) is heated by said secondary fluid.

6. Dishwashing machine (100) according to any of claims 3 to 5, wherein said secondary heating circuit (6) comprises a main heat exchange unit (61) heating water for treating dishware collected in a water reservoir (5).

7. Dishwashing machine (100) according to claim 6, further comprising an auxiliary heat exchange unit (62), arranged along said secondary circuit (6) downstream said main heat exchange unit (61) with reference to a circulation direction of said secondary fluid in said secondary heating circuit (6), said auxiliary heat exchange unit (62) being arranged for heating water in a wash tank (51) collecting water for washing dishware in said washing unit (1).

8. Method for operating a dishwashing machine (100) including a washing unit (1), a rinsing unit (2) and a heat pump circuit (3) for heating water to be used in said washing unit (1) and/or in said rinsing unit (2), wherein a washing chamber (10) and a rinsing chamber (20) are defined in said washing unit (1) and in said rinsing unit (2) respectively, and wherein said washing unit (1) comprises an inlet opening (11) through which dishware enters said washing unit (1) and said rinsing unit (2) comprises an outlet opening (21) through which dishware exits from said rinsing unit (2), said method comprising:
- mixing an air flow (A) from an environment in which the dishwashing machine (100) is installed with a vapour flow (V) exiting from said washing unit (1) and/or said rinsing unit (2);
- heating a flow of working fluid in said heat pump circuit (3) by a mixed flow (M) formed by said mixing said air flow (A) and said vapour flow (V),
**characterized in that** said vapour flow (V) is collected outside said washing unit (1) upstream said inlet opening (11) and/or outside said rinsing unit (2) downstream said outlet opening (21).

9. Method for operating a dishwashing machine (100) according to claim 8, further comprising:
- heating a secondary fluid circulating in said secondary heating circuit (6) by means of said heat pump circuit (3);
- heating water for treating dishware in said dishwashing machine (100) by means of said secondary fluid heated by said heat pump circuit (3).

10. Method for operating a dishwashing machine (100) according to claim 9, wherein said secondary fluid in said secondary heating circuit (6) has a pressure higher than the atmospheric pressure.

11. Method for operating a dishwashing machine (100) according to any of claims 8 to 10, wherein said water for treating dishware in said dishwashing machine (100) is heated at a temperature suitable for sanitizing dishware.

12. Method for operating a dishwashing machine (100) according to any of claims 8 to 11, further comprising heating water provided from a main supply (101) by said secondary fluid.

## Patentansprüche

1. Geschirrspülmaschine (100), umfassend eine Wascheinheit (1), eine Spüleinheit (2) und einen Wärmepumpenkreislauf (3) zum Erhitzen von in der Wascheinheit (1) und/oder in der Spüleinheit (2) zu benutzendem Wasser, wobei eine Waschkammer (10) und eine Spülkammer (20) in der Wascheinheit (1) beziehungsweise in der Spüleinheit (2) definiert sind, wobei sie ferner eine Saugvorrichtung (4) umfasst, die einen Luftstrom (A), der aus der Umgebung, in der die Geschirrspülmaschine (100) installiert ist, angesaugt wird, und einen Dampfstrom (V), der aus der Spüleinheit (2) und/oder aus der Wascheinheit (1) austritt, mischt, wobei die Saugvorrichtung (4) fluidisch mit einer Wärmepumpenwärmetauscheinheit (30) des Wärmepumpenkreislaufs (3) verbunden ist, um eine Arbeitsflüssigkeit, die in dem Wärmepumpenkreislauf (3) strömt, durch einen Mischstrom (M) aus dem Luftstrom (A) und dem Dampfstrom (V) zu erhitzen,
wobei die Wascheinheit (1) eine Einlassöffnung (11) umfasst, durch die Geschirr in die Wascheinheit (1) eintritt, und die Spüleinheit (2) eine Auslassöffnung (21) umfasst, durch die Geschirr aus der Spüleinheit (2) austritt, **dadurch gekennzeichnet, dass** die Saugvorrichtung (4) eine Saugöffnung (40) umfasst, um den Dampfstrom (V), der sich stromaufwärts von der Einlassöffnung (11) und/oder stromabwärts von der Auslassöffnung (21) befindet, aufzunehmen.

2. Geschirrspülmaschine (100) nach Anspruch 1, wobei die Saugvorrichtung (4) einen Verbindungskanal (42) umfasst, der den Mischstrom (M) der Wärmepumpenwärmetauscheinheit (30) zuführt, wobei sich der Verbindungskanal (42) wenigstens zum Teil über der Wascheinheit (10) und/oder der Spüleinheit (20) befindet.

3. Geschirrspülmaschine (100) nach einem der vorhergehenden Ansprüche, ferner umfassend einen sekundären Heizkreislauf (6), der Wasser erhitzt, um Geschirr in der Geschirrspülmaschine (100) mittels einer sekundären Flüssigkeit zu behandeln, die in dem sekundären Heizkreislauf (6) zirkuliert, wobei der sekundäre Heizkreislauf (6) eine sekundäre Wärmetauscheinheit (60) umfasst, die zum Erhitzen der sekundären Flüssigkeit thermisch mit dem Wärmepumpenkreislauf (3) gekoppelt ist.

4. Geschirrspülmaschine (100) nach Anspruch 3, wobei der Wärmepumpenkreislauf (3) und der sekundäre Heizkreislauf (6) auf eine solche Weise ausgeführt und ausgelegt sind, dass, wenn der Wärmepumpenkreislauf (3) mit voller Leistung arbeitet, die sekundäre Flüssigkeit eine Temperatur, die wenigstens gleich einer Reinigungstemperatur des Geschirrs ist, wenigstens an einer vorgegebenen Stelle entlang dem sekundären Heizkreislauf (6) aufweist, die in Bezug auf eine Zirkulationsrichtung der sekundären Flüssigkeit in dem sekundären Heizkreislauf (6) stromabwärts von der sekundären Wärmetauscheinheit (60) gelegen ist.

5. Geschirrspülmaschine (100) nach Anspruch 3 oder 4, wobei der sekundäre Heizkreislauf (6) eine nachgeordnete Wärmetauscheinheit (63) umfasst, in der von einer Hauptversorgung (101) bereitgestelltes Wasser durch die sekundäre Flüssigkeit erhitzt wird.

6. Geschirrspülmaschine (100) nach einem der Ansprüche 3 bis 5, wobei der sekundäre Heizkreislauf (6) eine Hauptwärmetauscheinheit (61) umfasst, die Wasser erhitzt, um in einem Wasserbehälter (5) aufgenommenes Geschirr zu behandeln.

7. Geschirrspülmaschine (100) nach Anspruch 6, ferner umfassend eine zusätzliche Wärmetauscheinheit (62), die in Bezug auf eine Zirkulationsrichtung der sekundären Flüssigkeit in dem sekundären Heizkreislauf (6) stromabwärts von der Hauptwärmetauscheinheit (61) entlang dem sekundären Kreislauf (6) angeordnet ist, wobei die zusätzliche Wärmetauscheinheit (62) zum Erhitzen von Wasser in einem Waschtank (51) angeordnet ist, der Wasser zum Spülen von Geschirr in der Wascheinheit (1) aufnimmt.

8. Verfahren zum Betrieb einer Geschirrspülmaschine (100), die eine Wascheinheit (1), eine Spüleinheit (2) und einen Wärmepumpenkreislauf (3) zum Erhitzen von in der Wascheinheit (1) und/oder in der Spüleinheit (2) zu benutzendem Wasser umfasst, wobei eine Waschkammer (10) und eine Spülkammer (20) in der Wascheinheit (1) beziehungsweise in der Spüleinheit (2) definiert sind und wobei die Wascheinheit (1) eine Einlassöffnung (11) umfasst, durch die Geschirr in die Wascheinheit (1) eintritt, und die Spüleinheit (2) eine Auslassöffnung (21) umfasst, durch die Geschirr aus der Spüleinheit (2) austritt, wobei das Verfahren Folgendes umfasst:
- Mischen eines Luftstroms (A) aus einer Umgebung, in der die Geschirrspülmaschine (100) installiert ist, mit einem Dampfstrom (V), der aus der Wascheinheit (1) und/oder der Spüleinheit (2) austritt,
- Erhitzen eines Stroms von Arbeitsflüssigkeit in dem Wärmepumpenkreislauf (3) durch einen Mischstrom (M), der von dem Luftstrom (A) und dem Dampfstrom (V) gebildet wird,
**dadurch gekennzeichnet, dass** der Dampfstrom (V) außerhalb der Wascheinheit (1) stromaufwärts von der Einlassöffnung (11) und/oder außerhalb der Spüleinheit (2) stromabwärts von der Auslassöffnung (21) aufgenommen wird.

9. Verfahren zum Betrieb einer Geschirrspülmaschine (100) nach Anspruch 8, ferner umfassend:
- Erhitzen einer sekundären Flüssigkeit, die in dem sekundären Heizkreislauf (6) zirkuliert, mittels des Wärmepumpenkreislaufs (3),
- Erhitzen von Wasser zum Behandeln von Geschirr in der Geschirrspülmaschine (100) mittels der sekundären Flüssigkeit, die durch den Wärmepumpenkreislauf (3) erhitzt wird.

10. Verfahren zum Betrieb einer Geschirrspülmaschine (100) nach Anspruch 9, wobei die sekundäre Flüssigkeit in dem sekundären Heizkreislauf (6) einen Druck aufweist, der höher als der atmosphärische Druck ist.

11. Verfahren zum Betrieb einer Geschirrspülmaschine (100) nach einem der Ansprüche 8 bis 10, wobei das Wasser zum Behandeln von Geschirr in der Geschirrspülmaschine (100) bei einer Temperatur erhitzt wird, die zum Reinigen von Geschirr geeignet ist.

12. Verfahren zum Betrieb einer Geschirrspülmaschine (100) nach einem der Ansprüche 8 bis 11, ferner umfassend das Erhitzen von Wasser, das aus einer Hauptversorgung (101) durch die sekundäre Flüssigkeit bereitgestellt wird.

## Revendications

1. Lave-vaisselle (100) comprenant une unité de lavage (1), une unité de rinçage (2) et un circuit de pompe à chaleur (3) destiné à chauffer l'eau à utiliser dans ladite unité de lavage (1) et/ou dans ladite unité de rinçage (2), dans lequel une chambre de lavage (10) et une chambre de rinçage (20) sont respectivement définies dans ladite unité de lavage (1) et dans ladite unité de rinçage (2), le lave-vaisselle comprenant en outre un dispositif d'aspiration (4) mélangeant un flux d'air (A) tiré depuis un environnement dans lequel ledit lave-vaisselle (100) est installé et un flux de vapeur (V) sortant de ladite unité de rinçage (2) et/ou de ladite unité de lavage (1), ledit dispositif d'aspiration (4) étant relié hydrauliquement à une unité d'échange de chaleur de pompe à chaleur (30) dudit circuit de pompe à chaleur (3) pour chauffer un fluide de service circulant dans ledit circuit de pompe à chaleur (3) au moyen d'un flux mélangé (M) dudit flux d'air (A) et dudit flux de vapeur (V),
dans lequel ladite unité de lavage (1) comprend une ouverture d'entrée (11) à travers laquelle la vaisselle entre dans ladite unité de lavage (1), et ladite unité de rinçage (2) comprend une ouverture de sortie (21) à travers laquelle ladite vaisselle sort de ladite unité de rinçage (2), **caractérisé en ce que** ledit dispositif d'aspiration (4) comprend une ouverture d'aspiration (40) destinée à recueillir ledit flux de vapeur (V) qui est positionné en amont de ladite ouverture d'entrée (11) et/ou en aval de ladite ouverture de sortie (21).

2. Lave-vaisselle (100) selon la revendication 1, dans lequel ledit dispositif d'aspiration (4) comprend un conduit de raccordement (42) fournissant ledit flux mélangé (M) à ladite unité d'échange de chaleur de pompe à chaleur (30), ledit conduit de raccordement (42) étant positionné au moins en partie au-dessus de ladite unité de lavage (10) et/ou de ladite unité de rinçage (20).

3. Lave-vaisselle (100) selon l'une quelconque des revendications précédentes, comprenant en outre un circuit de chauffage secondaire (6) chauffant l'eau de traitement de la vaisselle dans ledit lave-vaisselle (100)au moyen d'un fluide secondaire circulant dans ledit circuit de chauffage secondaire (6), ledit circuit de chauffage secondaire (6) comprenant une unité d'échange de chaleur secondaire (60) couplée thermiquement avec ledit circuit de pompe à chaleur (3) afin de chauffer ledit fluide secondaire.

4. Lave-vaisselle (100) selon la revendication 3, dans lequel ledit circuit de pompe à chaleur (3) et ledit circuit de chauffage secondaire (6) sont conçus et configurés de sorte que, lorsque ledit circuit de pompe à chaleur (3) fonctionne à pleine performance, ledit fluide secondaire présente une température au moins égale à une température de nettoyage de la vaisselle, au moins à une position prédéterminée le long dudit circuit de chauffage secondaire (6) située en aval de ladite unité d'échange de chaleur secondaire (60), par rapport à un sens de circulation dudit fluide secondaire dans ledit circuit de chauffage secondaire (6).

5. Lave-vaisselle (100) selon la revendication 3 ou 4, dans lequel ledit circuit de chauffage secondaire (6) comprend une unité d'échange de chaleur arrière (63) dans laquelle l'eau fournie par une alimentation principale (101) est chauffée par ledit fluide secondaire.

6. Lave-vaisselle (100) selon l'une quelconque des revendications 3 à 5, dans lequel ledit circuit de chauffage secondaire (6) comprend une unité d'échange de chaleur principale (61) chauffant l'eau de traitement de la vaisselle recueillie dans un réservoir d'eau (5).

7. Lave-vaisselle (100) selon la revendication 6, comprenant en outre une unité d'échange de chaleur auxiliaire (62), disposée le long dudit circuit secondaire (6) en aval de ladite unité d'échange de chaleur principale (61) par rapport à un sens de circulation dudit fluide secondaire dans ledit circuit de chauffage secondaire (6), ladite unité d'échange de chaleur auxiliaire (62) étant agencée pour chauffer l'eau dans une cuve de lavage (51) recueillant l'eau pour laver la vaisselle dans ladite unité de lavage (1).

8. Procédé d'utilisation d'un lave-vaisselle (100) incluant une unité de lavage (1), une unité de rinçage (2) et un circuit de pompe à chaleur (3) destiné à chauffer l'eau à utiliser dans ladite unité de lavage (1) et/ou dans ladite unité de rinçage (2), dans lequel une chambre de lavage (10) et une chambre de rinçage (20) sont respectivement définies dans ladite unité de lavage (1) et dans ladite unité de rinçage (2), et dans lequel ladite unité de lavage (1) comprend une ouverture d'entrée (11) à travers laquelle la vaisselle entre dans ladite unité de lavage (1), et ladite unité de rinçage (2) comprend une ouverture de sortie (21) à travers laquelle ladite vaisselle sort de ladite unité de rinçage (2), ledit procédé comprenant :
le mélange d'un flux d'air (A) d'un environnement dans lequel le lave-vaisselle (100) est installé avec un flux de vapeur (V) sortant de ladite unité de lavage (1) et/ou de ladite unité de rinçage (2) ;
le chauffage d'un flux de fluide de service dans ledit circuit de pompe à chaleur (3) au moyen d'un flux mélangé (M) formé par ledit mélange dudit flux d'air (A) et dudit flux de vapeur (V),
**caractérisé en ce que** ledit flux de vapeur (V) est recueilli à l'extérieur de ladite unité de lavage (1) en amont de ladite ouverture d'entrée (11) et/ou à l'extérieur de ladite unité de rinçage (2) en aval de ladite ouverture de sortie (21).

9. Procédé d'utilisation d'un lave-vaisselle (100) selon la revendication 8, comprenant en outre :
le chauffage d'un fluide secondaire circulant dans ledit circuit de chauffage secondaire (6) au moyen dudit circuit de pompe à chaleur (3) ;
le chauffage d'eau pour le traitement de la vaisselle dans ledit lave-vaisselle (100) au moyen dudit fluide secondaire chauffé par ledit circuit de pompe à chaleur (3).

10. Procédé d'utilisation d'un lave-vaisselle (100) selon la revendication 9, dans lequel ledit fluide secondaire dans ledit circuit de chauffage secondaire (6) présente une pression supérieure à la pression atmosphérique.

11. Procédé d'utilisation d'un lave-vaisselle (100) selon l'une quelconque des revendications 8 à 10, dans lequel ladite eau de traitement de la vaisselle dans ledit lave-vaisselle (100) est chauffée à une température adaptée au nettoyage de la vaisselle.

12. Procédé d'utilisation d'un lave-vaisselle (100) selon l'une quelconque des revendications 8 à 11, comprenant en outre un chauffage de l'eau fournie depuis une alimentation principale (101) par ledit fluide secondaire.
